# EUROPEAN PATENT APPLICATION

(11) **EP 4 715 094 A1**
(43) Date of publication of application: **25.03.2026**
(21) Application number: 24807017.9
(22) Date of filing: 26.04.2024
(51) Int. Cl.: C25C 1/08

(54) **COBALT RECOVERY METHOD**

(30) Priority: 18.05.2023 JP 2023082354
(71) Applicant: Mitsubishi Materials Corporation, Tokyo 100-8117 (JP)
(72) Inventor: IMASAKI Nanako, Iwaki-shi, Fukushima 971-8101 (JP); KURAMOCHI Kenta, Iwaki-shi, Fukushima 971-8101 (JP); MIYAZAKI Atsushi, Iwaki-shi, Fukushima 971-8101 (JP); MURAOKA Hiroki, Iwaki-shi, Fukushima 971-8101 (JP)
(74) Representative: Gille Hrabal Partnerschaftsgesellschaft mbB Patentanwälte
(86) International application number: PCT/JP2024/016421
(87) International publication number: WO 2024/237063

(57) **Abstract**

A cobalt recovery method of recovering cobalt from a cobalt sulfate solution, which includes adding, to the cobalt sulfate solution, an additive in which solubility decreases at a pH of 2.0 or less, and electrowinning cobalt from the cobalt sulfate solution to which the additive is added. It is preferable that the additive has a pH buffering effect in a pH range of 2.0 or more and 4.5 or less.

## Description

### TECHNICAL FIELD

The present invention relates to a cobalt recovery method of recovering cobalt from a sulfuric acid solution in which the cobalt is dissolved (cobalt sulfate solution).

Priority is claimed on Japanese Patent Application No. 2023-082354, filed May 18, 2023, the content of which is incorporated herein by reference.

### BACKGROUND ART

In the related art, an electrowinning method is used as a method of recovering cobalt from a cobalt-dissolved solution (cobalt sulfate solution).

In the electrowinning of cobalt, a solution in which the cobalt is dissolved is used as an electrolytic solution, an insoluble anode and cathode are immersed in the electrolytic solution, and the cobalt is electrolytically reduced and deposited on a surface of the cathode by applying a predetermined voltage between the anode and the cathode, thereby collecting the cobalt.

Here, in the electrowinning of cobalt, since the pH decreases during the electrolysis, a reaction other than the reaction in which the cobalt is deposited on the surface of the cathode (for example, a hydrogen-evolution reaction or the like) is likely to occur, which is a factor in the decrease in current efficiency. In addition, when the pH of the electrolytic solution is low, there is a problem in that adhesiveness between the deposited cobalt and the cathode is high, and thus it is difficult to detach and recover the deposited cobalt.

On the other hand, although the current efficiency is improved by maintaining the pH of the electrolytic solution in a high state, there is a concern that the deposited cobalt may be naturally detached and the anode and the cathode may be short-circuited due to deteriorated adhesiveness between the cobalt and the cathode.

Therefore, for example, Patent Document 1 proposes a technique for controlling a surface roughness of an electrode plate (cathode plate) to ensure detachability of a metal deposited on the electrode plate.

### Citation List

### Patent Document

Patent Document 1: Japanese Unexamined Patent Application, First Publication No. 2020-164972

### SUMMARY OF INVENTION

### Technical Problem

However, the method disclosed in Patent Document 1 has a problem that processing cost is high. In addition, it is difficult to control the detachability of cobalt deposited only by a surface shape of the electrode plate.

The present invention has been made in view of the above-described circumstances, and an objective of the present invention is to provide a cobalt recovery method capable of efficiently and stably recovering cobalt from a cobalt sulfate solution. Solution to Problem

In order to solve the above-described problem, a cobalt recovery method according to an aspect 1 of the present invention is a cobalt recovery method of recovering cobalt from a cobalt sulfate solution, the cobalt recovery method including the steps of: adding, to the cobalt sulfate solution, an additive in which solubility decreases at a pH of 2.0 or less; and electrowinning cobalt from the cobalt sulfate solution to which the additive is added.

With the cobalt recovery method according to the aspect 1 of the present invention, since the solubility of the additive decreases at a pH of 2.0 or less, when a pH of the electrolytic solution decreases to 2.0 or less, the additive is deposited on a surface of a cathode, so that adhesiveness between cobalt deposited on the surface of the cathode and the cathode can be appropriately controlled, the deposited cobalt can be easily detached, and the natural detachment of the cobalt can be suppressed to suppress occurrence of short-circuit.

A cobalt recovery method according to an aspect 2 of the present invention is the cobalt recovery method according to the aspect 1, in which the additive has a pH buffering effect in a pH range of 2.0 or more and 4.5 or less.

With the cobalt recovery method according to the aspect 2 of the present invention, since the additive having a pH buffering effect in a pH range of 2.0 or more and 4.5 or less is added to the cobalt sulfate solution, it is possible to suppress a rapid decrease in pH even when electrolysis is in progress, and thus it is possible to suppress a decrease in current efficiency.

A cobalt recovery method according to an aspect 3 of the present invention is the cobalt recovery method according to the aspect 1 or 2, in which potassium hydrogen phthalate is used as the additive.

With the cobalt recovery method according to the aspect 3 of the present invention, since the potassium hydrogen phthalate is used as the additive, when the pH of the electrolytic solution decreases to 2.0 or less, the potassium hydrogen phthalate is deposited on the surface of the cathode, and thus it is possible to appropriately control the adhesiveness between cobalt deposited on the surface of the cathode and the cathode.

A cobalt recovery method according to an aspect 4 of the present invention is the cobalt recovery method according to the aspect 3, in which an addition amount of the potassium hydrogen phthalate is in a range of 15 g/L or more and 25 g/L or less.

With the cobalt recovery method according to the aspect 4 of the present invention, since the addition amount of the potassium hydrogen phthalate is set to be in a range of 15 g/L or more and 25 g/L or less, the pH buffering effect can be sufficiently exhibited, and it is possible to appropriately control the adhesiveness between cobalt deposited on the surface of the cathode and the cathode.

A cobalt recovery method according to an aspect 5 of the present invention is the cobalt recovery method according to any one of the aspects 1 to 4, in which the cobalt sulfate solution is obtained by separating cobalt from a lithium ion battery scrap. With the cobalt recovery method according to the aspect 5 of the present invention, since the cobalt sulfate solution is obtained by separating cobalt from the lithium ion battery scrap, the cobalt that is a valuable metal can be efficiently recovered from a discarded lithium ion battery.

### Advantageous Effects of Invention

According to the present invention, it is possible to provide a cobalt recovery method capable of efficiently and stably recovering cobalt from a cobalt sulfate solution.

### BRIEF DESCRIPTION OF DRAWINGS

[FIG. 1] A schematic explanatory view of an electrolytic device representing the cobalt recovery method according to the embodiment of the present invention.
[FIG. 2] A flowchart representing a method of obtaining a cobalt sulfate solution from a lithium ion battery.
[FIG. 3A] An observation image showing a result of Comparative Example.
[FIG. 3B] An observation image showing a result of Present Invention Example 1.
[FIG. 3C] An observation image showing a result of Present Invention Example 2.
[FIG. 3D] An observation image showing a result of Present Invention Example 3.
[FIG. 4] A graph representing a relationship between a change in pH of an electrolytic solution and a current efficiency in Examples.

### DESCRIPTION OF EMBODIMENTS

Hereinafter, embodiments of the present invention will be described.

The cobalt recovery method according to the present embodiment is, for example, a cobalt recovery method of recovering cobalt from a sulfuric acid solution in which the cobalt is dissolved (cobalt sulfate solution).

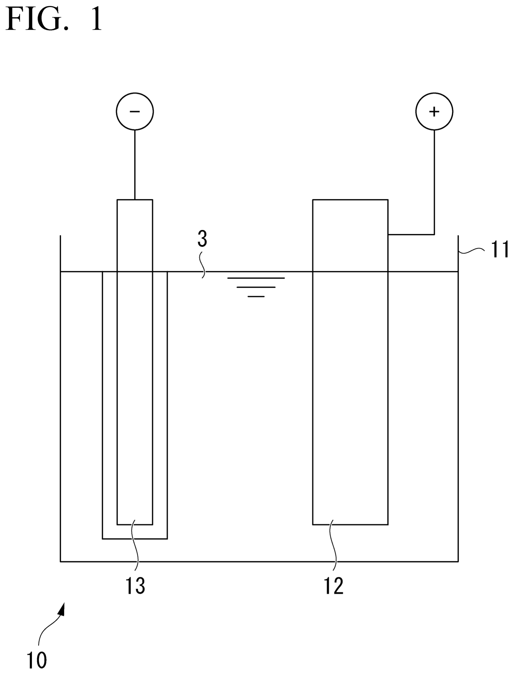

In the cobalt recovery method according to the present embodiment, for example, as in an electrolytic device 10 shown in FIG. 1, a sulfuric acid solution in which cobalt is dissolved (cobalt sulfate solution) is used as an electrolytic solution 3, an insoluble anode electrode 12 and an insoluble cathode electrode 13 are immersed in the electrolytic solution 3 stored in an electrolytic tank 11, and a predetermined voltage is applied between the anode electrode 12 and the cathode electrode 13 to electrolytically reduce the cobalt and deposit the cobalt on a surface of the cathode electrode 13, thereby collecting the cobalt.

In the present embodiment, an additive in which solubility decreases at a pH of 2.0 or less is added to the cobalt sulfate solution serving as the electrolytic solution 3, and the electrowinning is performed.

The additive is preferably an additive having a pH buffering effect in a pH range of 2.0 or more and 4.5 or less.

When the pH of the electrolytic solution 3 decreases during the electrolysis, adhesiveness between the deposited cobalt and the cathode electrode 13 is increased, and when the pH is to be 2.0 or less, the cobalt is difficult to detach. Here, when the additive in which solubility decreases at a pH of 2.0 or less is added, as the electrowinning proceeds and the pH of the electrolytic solution is to be 2.0 or less, the additive in the electrolytic solution is deposited on the surface of the cathode electrode 13, and it is possible to suppress strong adhesion between the cathode electrode 13 and cobalt, and thus to easily detach the deposited cobalt from the cathode electrode 13.

In addition, when the additive having a pH buffering effect in a range of a pH of 2.0 or more and 4.5 or less is added, by setting the pH of the electrolytic solution 3 to 2.0 or more, it is possible to suppress preferential occurrence of the hydrogen-evolution reaction, and thus to improve the current efficiency. On the other hand, by setting the pH of the electrolytic solution 3 to 4.5 or less, it is possible to suppress the cobalt from being deposited as a hydroxide, and thus to efficiently recover the cobalt.

Therefore, it is preferable to add the additive having a pH buffering effect in a pH range of 2.0 or more and 4.5 or less.

As described above, specific examples of the additive in which solubility decreases at a pH of 2.0 or less include potassium hydrogen phthalate (KHP). The potassium hydrogen phthalate (KHP) has the pH buffering effect in a pH range of 2.0 or more and 4.5 or less.

Here, when the potassium hydrogen phthalate is added as the additive, the addition amount thereof is preferably in a range of 15 g/L or more and 25 g/L or less.

By setting the addition amount of the potassium hydrogen phthalate to the electrolytic solution 3 to 15 g/L or more, the above-described pH buffering effect and an effect of controlling the adhesiveness between the cobalt and the cathode electrode 13 can be sufficiently exhibited.

The expression "the addition amount of the potassium hydrogen phthalate to the electrolytic solution 3 is 15 g/L or more" means that the potassium hydrogen phthalate is added to the electrolytic solution 3 such that the concentration of the potassium hydrogen phthalate in the electrolytic solution 3 is 15 g/L or more.

On the other hand, by setting the addition amount of the potassium hydrogen phthalate to the electrolytic solution 3 to 25 g/L or less, it is possible to suppress the deposition of the potassium hydrogen phthalate from the start of the electrolysis, and thus it is possible to suppress the natural detachment of the cobalt.

Here, a temperature of the electrolytic solution 3 during the electrowinning is preferably maintained in a range of 50°C or higher and 55°C or lower.

By setting the temperature of the electrolytic solution 3 to 50°C or higher, a reaction rate can be secured. On the other hand, by setting the temperature of the electrolytic solution 3 to 55°C or lower, evaporation of the electrolytic solution 3 can be suppressed, and thus the deposition of cobalt sulfate can be suppressed.

In addition, a current density during the electrowinning is preferably in a range of 0.026 A/cm² or more and 0.040 A/cm² or less.

By performing the electrowinning with the current density in a range of 0.026 A/cm² or more and 0.040 A/cm² or less, a decrease in current efficiency can be suppressed, and thus the electrowinning of cobalt can be efficiently performed.

Furthermore, a cobalt concentration in the electrolytic solution 3 is preferably in a range of 50 g/L or more and 100 g/L or less.

By setting the cobalt concentration in the electrolytic solution 3 to 50 g/L or more, the decrease in current efficiency can be suppressed, and thus the electrowinning of cobalt can be efficiently performed. On the other hand, by setting the cobalt concentration in the electrolytic solution 3 to 100 g/L or less, the deposition of cobalt sulfate is suppressed.

In addition, it is preferable that a pH of the electrolytic solution 3 at the start of the electrowinning is in a range of 4.0 or more and 4.5 or less.

By setting the pH of the electrolytic solution 3 at the start of the electrowinning to 4.5 or less, it is possible to suppress the cobalt from being deposited as a hydroxide, and thus to efficiently recover the cobalt.

By setting the pH of the electrolytic solution 3 at the start of the electrowinning to 4.0 or more, it is possible to secure a time until the pH of the electrolytic solution 3 decreases to 2.0 or less when the electrowinning is started, and thus it is possible to efficiently perform the electrowinning.

In the present embodiment, it is preferable that the cobalt sulfate solution serving as the electrolytic solution 3 is obtained by separating cobalt from a lithium ion battery scrap that is obtained by crushing waste of a lithium ion battery.

As a specific method of obtaining the cobalt sulfate solution from a lithium ion battery, a method described in Japanese Patent No. 7121885 can be adopted.

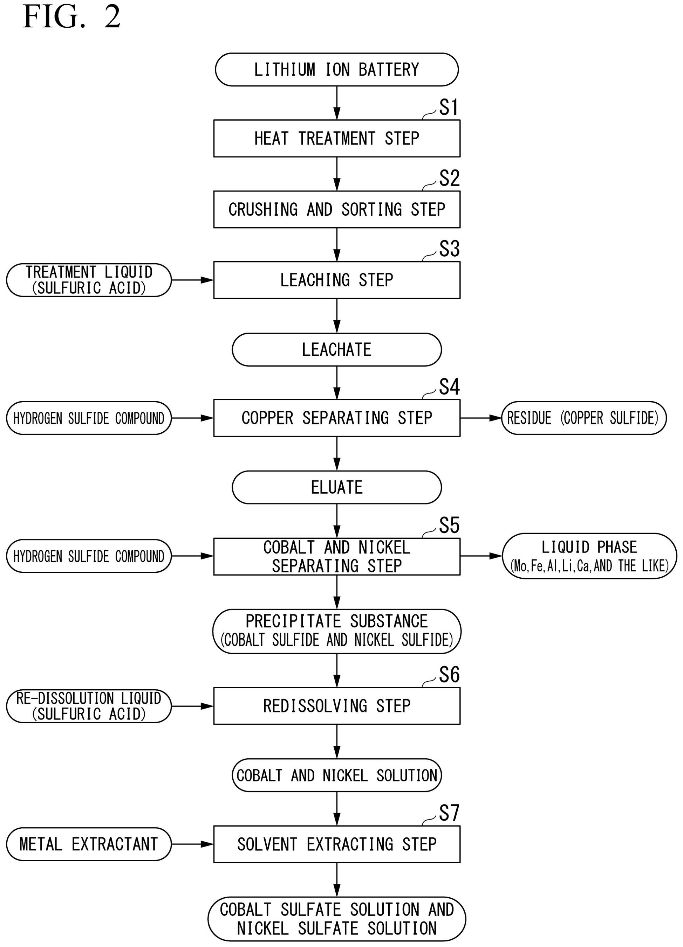

That is, as shown in a flowchart of FIG. 2, the cobalt sulfate solution is obtained by a heat treatment step S1 of subjecting a discarded lithium ion battery to a heat treatment; a crushing and sorting step S2 of crushing the heat-treated lithium ion battery to sort an electrode material; a leaching step S3 of immersing the sorted electrode material in a treatment liquid obtained by mixing sulfuric acid and hydrogen peroxide to leach cobalt and nickel; a copper separating step S4 of adding a hydrogen sulfide compound to the obtained leachate to separate copper as copper sulfide (solid); a cobalt and nickel separating step S5 of adjusting a pH of the eluate obtained in the copper separating step S4, and then adding a hydrogen sulfide compound to the eluate to obtain a precipitate substance containing cobalt sulfide and nickel sulfide; a redissolving step S6 of dissolving the precipitate substance in a re-dissolution liquid containing sulfuric acid; and a solvent extracting step S7 of adding an extractant solution to the cobalt and nickel solution obtained in the redissolving step S6 to obtain a cobalt sulfate solution and a nickel sulfate solution.

By applying the cobalt recovery method according to the present embodiment to the obtained cobalt sulfate solution in this manner, it is possible to recover cobalt that is a valuable metal from the discarded lithium ion battery.

With the cobalt recovery method according to the present embodiment, having the above-described configuration, since the additive in which solubility decreases at a pH of 2.0 or less is added to the electrolytic solution 3 containing the cobalt sulfate solution, when the pH of the electrolytic solution 3 decreases to 2.0 or less, the additive is deposited on the surface of the cathode electrode 13, so that the adhesiveness between the deposited cobalt and the cathode electrode 13 can be appropriately controlled, the deposited cobalt can be easily detached, and the natural detachment of cobalt can be suppressed to suppress the occurrence of the short-circuit.

In the cobalt recovery method according to the present embodiment, when a substance having a pH buffering effect in a pH range of 2.0 or more and 4.5 or less is added as the additive, it is possible to suppress a rapid decrease in pH even when the electrolysis proceeds, and thus it is possible to suppress the decrease in current efficiency.

In the cobalt recovery method according to the present embodiment, when potassium hydrogen phthalate is used as the additive, as the pH of the electrolytic solution 3 decreases to 2.0 or less, the potassium hydrogen phthalate is deposited on the surface of the cathode electrode 13, so that the adhesiveness between the deposited cobalt and the cathode electrode 13 can be appropriately controlled.

In addition, a sufficient pH buffering effect can be obtained when the pH is in a range of 2.0 or more and 4.5 or less, so that the rapid decrease in pH is suppressed even when the electrolysis proceeds, and thus it is possible to suppress the decrease in current efficiency.

In the cobalt recovery method according to the present embodiment, when the addition amount of the potassium hydrogen phthalate added as the additive is in a range of 15 g/L or more and 25 g/L or less, the pH adjustment effect can be sufficiently exhibited, and thus it is possible to appropriately control the adhesiveness between the deposited cobalt and the cathode electrode 13.

In the cobalt recovery method according to the present embodiment, when the cobalt sulfate solution used as the electrolytic solution 3 is obtained by separating cobalt from a lithium ion battery scrap, the cobalt as a valuable metal can be efficiently recovered with high purity from the discarded lithium ion battery.

The embodiment of the present invention has been described; however, the present invention is not limited to this and can be appropriately changed without departing from the technical ideas of the present invention.

### Examples

A description will be given below of the results of verification experiments conducted to verify the effectiveness of the present invention.

### (Present Invention Examples 1 to 3)

A cobalt sulfate solution having a cobalt concentration of 50 g/L was prepared. **In** Present Invention Examples, potassium hydrogen phthalate was added as an additive to the cobalt sulfate solution. An addition amount of the potassium hydrogen phthalate was set to 20 g/L in Present Invention Example 1, 10 g/L in Present Invention Example 2, and 30 g/L in Present Invention Example 3.

The electrolytic solution of the cobalt sulfate solution to which the additive had been added was used for carrying out electrowinning under conditions of a pH of 4.0 at the start of electrolysis, an electrolytic solution temperature of 55°C, and a current density of 0.026 A/cm².

### (Comparative Example)

A cobalt sulfate solution having a cobalt concentration of 50 g/L was prepared. In Comparative Example, an additive was not added to the cobalt sulfate solution.

The electrolytic solution of the cobalt sulfate solution was used for carrying out electrowinning under conditions of a pH of 4.0 at the start of electrolysis, an electrolytic solution temperature of 55°C, and a current density of 0.026 A/cm².

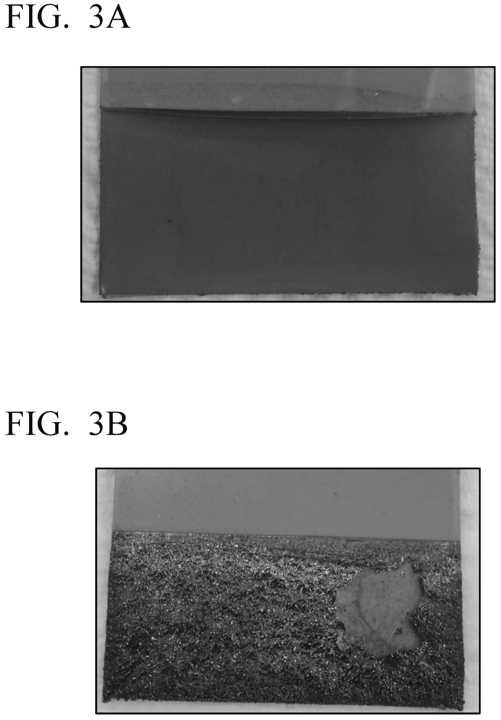

In Present Invention Examples and Comparative Example, a state of cobalt produced on a surface of a cathode electrode is shown in FIGS. 3A to 3D.

In addition, in Present Invention Examples and Comparative Example, the cobalt obtained by the electrowinning was dissolved in acid, and the cobalt was quantified and analyzed by ICP-AES to evaluate a purity of the cobalt. The evaluation results are shown in Table 1.

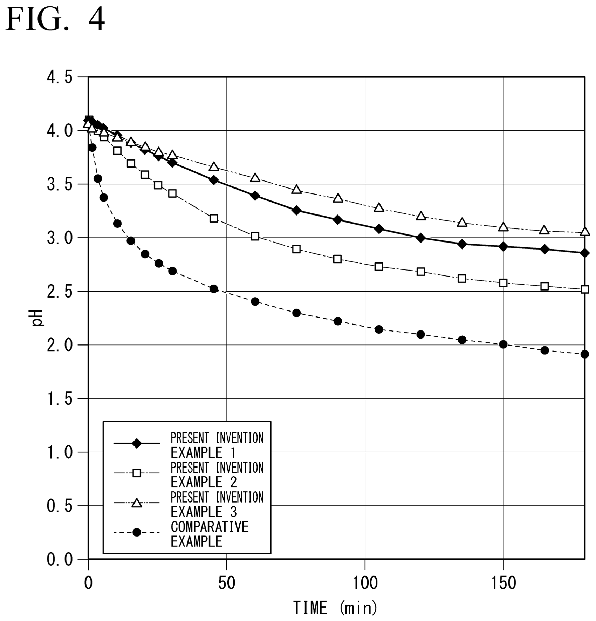

Furthermore, FIG. 4 shows results of confirming an elapsed time from the start of the electrowinning and the change in pH of the electrolytic solution in Present Invention Examples 1 to 3 and Comparative Example.

**[Table 1]**

| | Addition amount of additive (g/L) | pH after 3 hours | Current efficiency (A/cm²) | Deposited cobalt | |
|---|---|---|---|---|---|
| | | | | Purity (mass%) | Detachability |
| Present Invention Example 1 | 20 | 2.85 | 85.5 | 99.65 | Favorable |
| Present Invention Example 2 | 10 | 2.52 | 54.6 | 99.62 | Favorable |
| Present Invention Example 3 | 30 | 3.05 | 68.5 | 99.65 | Favorable |
| Comparative Example | - | 1.90 | 83.7 | 99.67 | Difficult |

In Comparative Example 1, the additive was not added to the electrolytic solution (cobalt sulfate solution); and as shown in FIG. 3A, the cobalt was strongly adhered to the surface of the cathode electrode plate, so that it was difficult to detach the cobalt by a method generally used. The method generally used includes a method of physically separating the cobalt on the surface from the surface of the cathode electrode plate using a tool such as a spatula and a scraper. In addition, as shown in FIG. 4, when the electrowinning proceeded, the pH of the electrolytic solution rapidly decreased, and the current efficiency was 83.7%.

On the other hand, in Present Invention Example 1, 20 g/L of potassium hydrogen phthalate was added as the additive to the electrolytic solution (cobalt sulfate solution); and as shown in FIG. 3B, the cobalt was not strongly adhered to the surface of the cathode electrode plate, so that the cobalt was easily detached by the method generally used. In addition, even when the additive was added, no significant difference was confirmed in the purity of cobalt to be obtained.

In addition, as shown in FIG. 4, even when the electrowinning proceeded, the pH of the electrolytic solution did not rapidly decrease, and the current efficiency was 85.5%.

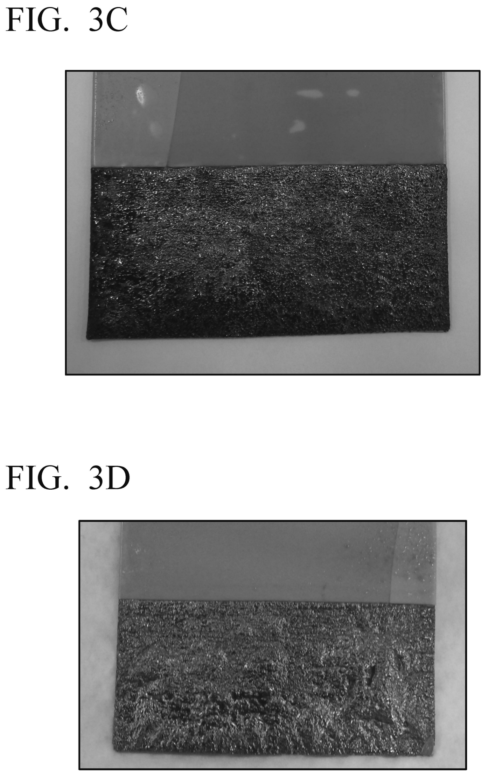

In Present Invention Example 2, 10 g/L of potassium hydrogen phthalate was added as the additive to the electrolytic solution (cobalt sulfate solution); and as shown in FIG. 3C, the cobalt was not strongly adhered to the surface of the cathode electrode plate, so that the cobalt was easily detached by the method generally used. In addition, even when the additive was added, no significant difference was confirmed in the purity of cobalt to be obtained.

On the other hand, as shown in FIG. 4, even when the electrowinning proceeded, the pH of the electrolytic solution did not rapidly decrease, but the current efficiency was 54.6%.

In Present Invention Example 3, 30 g/L of potassium hydrogen phthalate was added as the additive to the electrolytic solution (cobalt sulfate solution); and as shown in FIG. 3D, the cobalt was not strongly adhered to the surface of the cathode electrode plate, so that the cobalt was easily detached by the method generally used. In addition, even when the additive was added, no significant difference was confirmed in the purity of cobalt to be obtained.

On the other hand, as shown in FIG. 4, even when the electrowinning proceeded, the pH of the electrolytic solution did not rapidly decrease, but the current efficiency was 68.5%. It is presumed that a large amount of additive was deposited and thus coated the electrode.

As a result of the above-described confirmation experiments, it was found that, according to the present invention, it is possible to provide a cobalt recovery method capable of efficiently and stably recovering cobalt from a cobalt sulfate solution.

### INDUSTRIAL APPLICABILITY

According to the present invention, it is possible to provide a cobalt recovery method capable of efficiently and stably recovering cobalt from a cobalt sulfate solution.

## Claims

1. A cobalt recovery method of recovering cobalt from a cobalt sulfate solution, the cobalt recovery method comprising the steps of:
adding, to the cobalt sulfate solution, an additive in which solubility decreases at a pH of 2.0 or less; and
electrowinning cobalt from the cobalt sulfate solution to which the additive is added.

2. The cobalt recovery method according to Claim 1,
wherein the additive has a pH buffering effect in a pH range of 2.0 or more and 4.5 or less.

3. The cobalt recovery method according to Claim 1 or 2,
wherein potassium hydrogen phthalate is used as the additive.

4. The cobalt recovery method according to Claim 3,
wherein an addition amount of the potassium hydrogen phthalate is in a range of 15 g/L or more and 25 g/L or less.

5. The cobalt recovery method according to Claim 1 or 2,
wherein the cobalt sulfate solution is obtained by separating cobalt from a lithium ion battery scrap.
